# EUROPEAN PATENT SPECIFICATION

(11) **EP 0 750 154 B1**
(45) Date of publication and mention of the grant of the patent: **21.10.1998**
(21) Application number: 96304572.9
(22) Date of filing: 20.06.1996
(51) Int. Cl.: F16L 37/088, F16B 21/18

(54) **Tube coupling**
Rohrverbindung
Raccord de tuyaux

(30) Priority: 20.06.1995 GB 9512502
(43) Date of publication of application: 27.12.1996
(73) Proprietor: Guest, John Derek, Maidenhead, Berkshire SL6 2RX (GB)
(72) Inventor: Guest, John Derek, Maidenhead, Berkshire SL6 2RX (GB)
(74) Representative: Bayliss, Geoffrey Cyril

(56) References cited:
- EP-A- 0 509 157
- JP-A- 7 042 718
- US-A- 3 752 515
- US-A- 4 844 211

## Description

This invention relates to tube couplings and in particular to a tube coupling for directly connecting a tube to another tube or similar component.

US-A-5,429,396, which is published after the date of priority of the present application, discloses a retainer in the form of a circlip for holding a connector or the like in a bore in a wall. The connector has a peripheral groove for receiving the circlip and the circlip has inwardly extending lugs at its free ends and an integral tongue on its inner periphery at an intermediate position around the circlip. The circlip also has three cam-like projections at its free ends and intermediate locations. A connector to be located in the bore in the wall is inserted through the bore with the circlip in place and the projections cause the circlip to be pressed into the groove in the connector as the circlip passes through the bore. Once through the bore, the circlip springs outwardly to engage behind the wall and retain the connector in place. That arrangement is suitable for a remote or "blind" mounting of a body in an open tube but is not suitable for connecting a coupling device such as a nut to a pipe end to enable a further component to be secured by the nut to the pipe.

US-A-3752515 discloses a support block for a pick-type bit or tool having a bore with a tapered mouth in which a tool having a cylindrical shank is received. The bore has a groove and the shank of the tool also has a groove in which a split resilient keeper ring is located having protuberances engageable with the groove in the bore. The keeper ring is so formed relative to the groove that the keeper ring can be readily compressed to within the envelope of the bore so that the tool can be inserted in and removed from the bore whilst the resilience of the keeper ring permits the protuberances to engage the groove in the bore to hold the tool in the bore.

JP-A-7042718, which is considered to be the closest prior art document, discloses a locking device for locking a component in a socket. The component has an encircling groove in which a circlip is located to lock the component in the socket.

This invention provides a tube coupling according to claim 1.

The second abutment on the tube may be an annular abutment formed integrally with the tube.

The first abutment at the end of the tube may be an annular abutment formed integrally with the tube.

The coupling device may be a nut having a bore to receive the tube, a portion of the bore adjacent the end which projects from the tube being screw-threaded to mate with a thread on another tube or component and the bore adjacent the other end of the nut being formed with said annular groove and profiled entry.

According to a preferred embodiment of the invention the circlip may comprise a part-annular sleeve to provide said abutment, the sleeve having an encircling rib on its outer periphery to engage in the groove in the coupling device.

The profiled entry to the coupling device is formed by a bevel.

The following is a description of a specific embodiment of the invention, reference being made to the accompanying drawings in which :
Figure 1 is an exploded view of the components of an elbow form joint, one limb of which has a coupling device for connection to a threaded tube; and
Figures 2 to 7 illustrate the step by step assembly of the components.

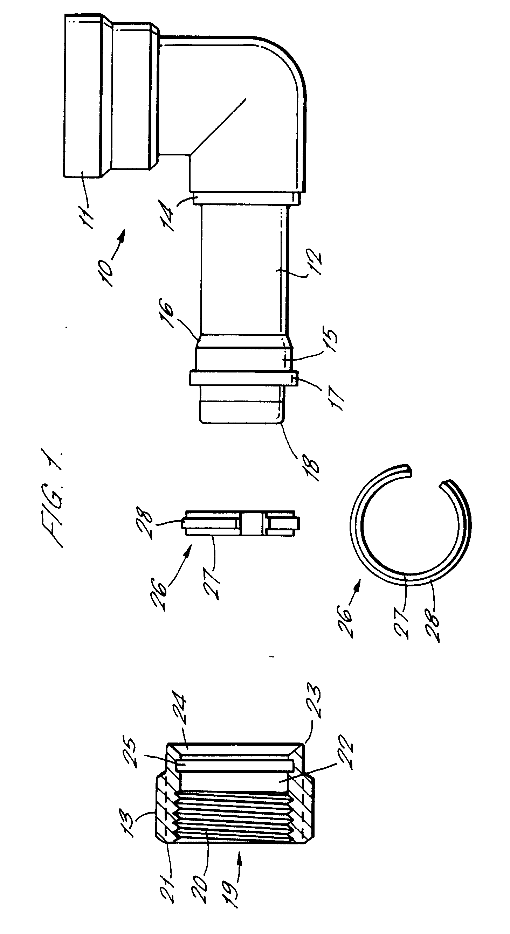

Referring firstly to Figure 1 of the drawings, there is shown a moulded plastics elbow form joint 10 for coupling two tubes extending at right angles to each other. One limb of the joint is formed with an enlarged body portion indicated at 11 to receive a collet form coupling device for example of the construction described and illustrated in GB-A-1520742 and GB-A-1573757. The other limb of the joint is formed with an extended of a reduced diameter rigid tube 12 on which a coupling device in the form of a nut 13 is located to make a compression joint with a tube or spigot of another component not shown.

The tube 12 has an encircling annular abutment 14 adjacent the angle of the elbow. Adjacent the free end of the tube 12, there is an enlarged diameter portion 15 merged with the body of a tube by a ramp 16 and terminating in an annular abutment 17 of similar diameter to the abutment 14. The plain end 18 of the tube 12 projects beyond the abutment 17.

Nut 13 is formed in brass or a similar metal or in a suitable plastics material. The nut has a bore 19 part screw threaded as indicated at 20 adjacent one end 21 and part plain as indicated at 11 adjacent the other end. The entry to the bore at the end 23 of the nut is formed with an encircling bevel 24 and the plain section of the bore 22 adjacent the entry is formed with an encircling groove 25.

The nut 13 is retained on the tube 12 between the abutments 14 and 17 by a circlip indicated at 26 and comprising a part annular sleeve 27 having an integral encircling rib 28. The circlip may be formed in a spring metal or a resilient plastics. As described below, the circlip is located on the tube 12 between the abutments 14 and 17 and is engaged in the plain bore 22 with the rib 28 located in the groove 25 to retain the nut on the tube whilst allowing the nut to move along the tube to project from the end 18 thereof for coupling to a screw threaded tube or spigot which is not shown.

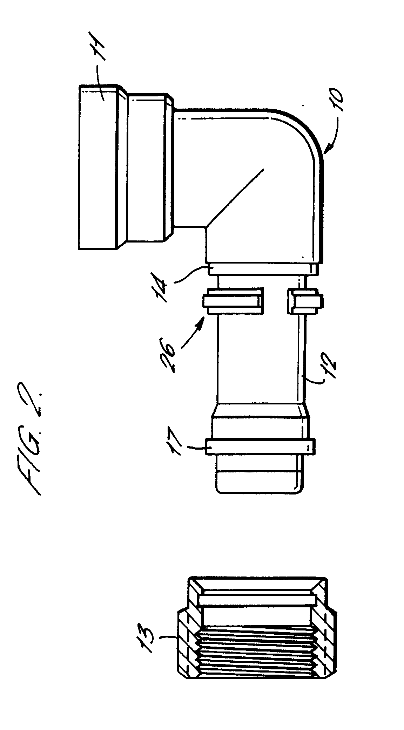

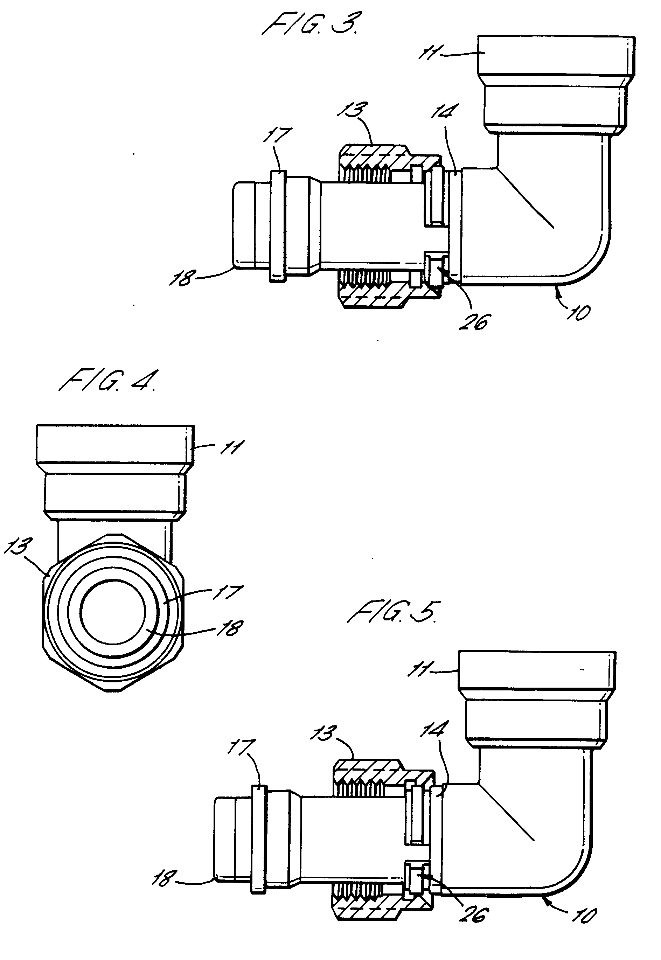

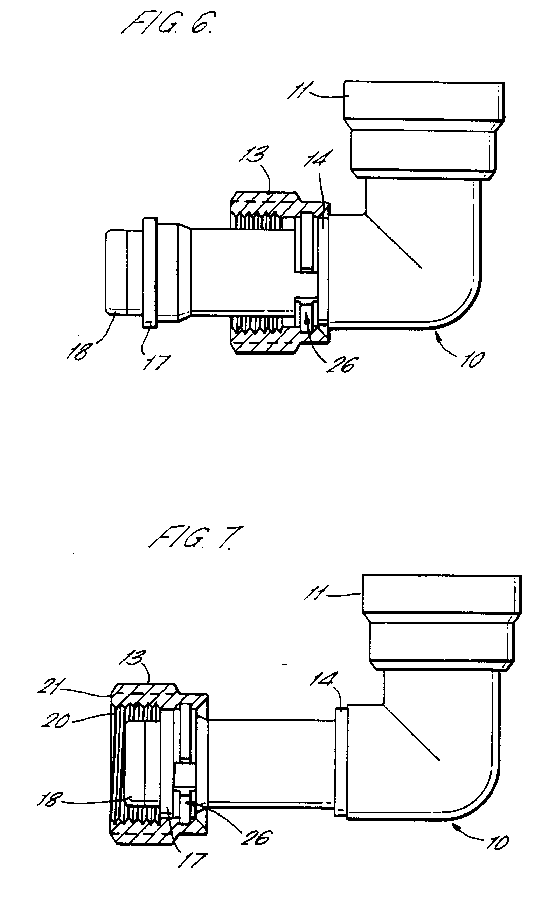

Reference is now made to Figures 2 to 7 which illustrate the sequence of assembly of the components on the tube 12 of the joint. Firstly the circlip 26 is snapped over the tube 12 as shown in Figure 2 ready to receive the nut 13. The nut is then passed over the open end of the tube, over the abutment 17 until it engages the circlip 26 with the annular rib 28 of the circlip lodging against the bevelled entry 24 into the nut. The nut is then pushed towards the abutment 14 until the circlip engages the abutment 14 as shown in Figure 3. Figure 4 shows the end view of the arrangement in that position.

The nut is then pressed further towards the abutment 14 and this causes the bevelled entry 24 to the nut to compress the circlip 26 inwardly around the tube until the rib 28 can enter the bore 22 in the circlip as shown in Figure 5.

The nut eventually reaches the position in which the rib 28 is opposite and springs into the groove 25 to locate the circlip axially in the nut. The nut, with the circlip installed can then be slid along the tube towards the other end until the sleeve 27 of the circlip 26 rides up over the ramp 16 on to the enlarged portion 15 and engages the annular abutment 17 as shown in Figure 7. The threaded portion 20 of the nut then encircles and projects beyond the free end 18 of the tube to be screwed onto a screw threaded end of another tube or spigot not shown to make a joint between the tube 12 and spigot.

The arrangement thus provides a convenient and simple way of permanently installing a compression coupling in the form of a screw threaded nut on a tube for coupling the tube to the further tube or spigot.

## Claims

1. A tube coupling comprising a tube (12) having an outwardly projecting abutment (17) at or adjacent one end (18) thereof and an annular coupling device (13) slidably mounted on the tube end to project in use at one end (21) thereof from the tube to mate with another tube or component, said coupling device (13) having an inner abutment (26) adjacent the other end (23) thereof to engage with said abutment (17) on the tube end to prevent the coupling device (13) from separating from the tube end (18), the coupling device (13) being formed with an internal annular groove (25) adjacent said other end (23) thereof with a profiled entry (24) leading from said other end (23) to the groove (25) and the inner abutment (26) on the coupling device comprising a circlip (26) encircling the tube (12) and engageable in the groove (25) by moving said other end (23) of the coupling device over the circlip (26), the profiled entry (24) compressing the circlip (26) to enter the coupling device (13) and to snap into the groove (25) to be retained therein and prevent disengagement of the coupling device (13) from the tube by engagement with said abutment (17) at the one end (18) of the tube; characterised in that the tube (12) has an enlarged diameter seat (15) adjacent said outwardly projecting abutment (17) on the tube (12) to engage in the circlip (26) and hold the circlip in said groove (25) in the coupling device (13); and in that the tube (12) is formed with a second abutment (14) spaced from and facing the first abutment (17) to restrain the circlip (26) when the coupling device (13) is moved over the circlip to engage the circlip in the groove (25) in the device.

2. A tube coupling as claimed in claim 1,
characterised in that the second abutment (14) on the tube (12) is an annular abutment formed integrally with the tube.

3. A tube coupling as claimed in claim 1 or claim 2, characterised in that the first abutment (17) at the one end (18) of the tube (12) is an annular abutment formed integrally with the tube.

4. A tube coupling as claimed in any one of claims 1 to 3, characterised in that the coupling device (13) is a nut having a bore (19) to receive the tube, a portion of the bore adjacent the one end (21) of the nut which may project from the tube being screw threaded (20) to mate with a thread on another component and the bore adjacent the other end (23) of the nut being formed with said annular groove (25) and profiled entry (24).

5. A tube coupling as claimed in any one of claims 1 to 4, characterised in that the circlip (26) comprises a part-annular sleeve (27) to provide said abutment, the sleeve having an encircling rib (28) on its outer periphery to engage in the annular groove (25) in the coupling device (13).

6. A tube coupling as claimed in any one of claims 1 to 5, characterised in that the profiled entry (24) to the coupling device (13) is formed by a bevel.

## Patentansprüche

1. Rohrkupplung mit einem Rohr (12) mit einem nach außen vorspringenden Anschlag (17) an oder nahe seinem einen Ende (18) und einem ringförmigen Kupplungselement (13), das auf dem Rohr derart verschiebbar gelagert ist, daß es in Gebrauch an seinem einen Ende (21) über das Rohr übersteht, um mit einem anderen Rohr oder Element zusammenzuwirken, wobei das Kupplungselement (13) nahe seinem einen Ende (23) einen inneren Anschlag (26) für das Zusammenwirken mit dem Anschlag (17) des Rohrendes aufweist, um ein Trennen des Kupplungselements (13) von dem Rohrende (18) zu verhindern, wobei in dem Kupplungselement (13) nahe dessen anderen Ende (26) eine innere Ringnut (25) ausgebildet ist, wobei ein Einführprofil (25) von dem anderen Ende (23) zu der Nut (25) führt, und wobei der innere Anschlag (26) des Kupplungselements einen Sprengring (26) aufweist, der das Rohr (12) umgibt und mit der Nut (25) in Eingriff bringbar ist durch Bewegen des anderen Endes (23) des Kupplungselements über den Sprengring (26), wobei das Einführprofil (24) den Sprengring (26) so zusammendrückt, daß er in das Kupplungselement (13) eintritt und in die Nut (25) einschnappt, so daß er in dieser festgehalten wird und eine Trennung des Kupplungselements (13) von dem Rohr durch Anlage an dem Anschlag (17) an dem einen Ende (18) des Rohres verhindert, dadurch **gekennzeichnet**, daß das Rohr (12) angrenzend an den nach außen vorspringenden Anschlag (17) an dem Rohr (12) einen Sitz (15) mit vergrößertem Durchmesser aufweist, der in den Sprengring (26) eingreift und den Sprengring in der Nut (25) in dem Kupplungselement (13) festhält; und daß an dem Rohr (12) ein zweiter Anschlag (14) im Abstand von und gegenüber dem ersten Anschlag (17) ausgebildet ist, um den Sprengring (26) zurückzuhalten, wenn das Kupplungselement (13) über den Sprengring bewegt wird, um den Sprengring in der Nut (25) des Elements zum Eingriff zu bringen.

2. Rohrkupplung nach Anspruch 1,
dadurch **gekennzeichnet**, daß der zweite Anschlag (14) an dem Rohr (12) ein einstückig mit dem Rohr ausgebildeter ringförmiger Anschlag ist.

3. Rohrkupplung nach Anspruch 1 oder 2,
dadurch **gekennzeichnet**, daß der erste Anschlag (17) an dem einen Ende (18) des Rohres (12) ein einstückig mit dem Rohr ausgebildeter ringförmiger Anschlag ist.

4. Rohrkupplung nach einem der Ansprüche 1 bis 3,
dadurch **gekennzeichnet**, daß das Kupplungselement (13) eine Mutter mit einer Bohrung (19) zur Aufnahme des Rohres ist, wobei ein Abschnitt der Bohrung an dem einen Ende (21) der Nut, das über das Rohr überstehen kann, mit einem Gewinde (20) zum Aufschrauben auf ein Gewinde an einer anderen Komponente versehen ist und daß in der Bohrung angrenzend an das andere Ende (23) der Nut die Ringnut (25) und das Einführprofil (24) ausgebildet ist.

5. Rohrkupplung nach einem der Ansprüche 1 bis 4,
dadurch **gekennzeichnet**, daß der Sprengring (26) eine teil-ringförmige Hülse (27) aufweist, die den Anschlag bildet, wobei die Hülse eine umlaufende Rippe (28) an ihrem Außenumfang aufweist, die in die Ringnut (25) in dem Kupplungselement (13) eingreift.

6. Rohrkupplung nach einem der Ansprüche 1 bis 5,
dadurch **gekennzeichnet**, daß das Einführprofil (28) an dem Kupplungselement (13) durch eine Abschrägung gebildet ist.

## Revendications

1. Raccord de tuyaux comprenant un tuyau (12) présentant une butée (17) faisant saillie vers l'extérieur au niveau d'une de ses extrémités (18) ou adjacente à celui-ci et un dispositif d'accouplement annulaire (13) monté de manière coulissante sur l'extrémité de tuyau afin de faire saillie en utilisation au niveau d'une de ses extrémités (21) à partir du tuyau pour coïncider avec un autre tuyau ou composant, ledit dispositif de couplage (13) présentant une butée intérieure (26) adjacente à son autre extrémité (23) afin de venir en prise avec ladite butée (17) sur l'extrémité de tuyau afin d'empêcher le dispositif d'accouplement (13) de se séparer de l'extrémité de tuyau (18), le dispositif d'accouplement (13) étant formé d'une gorge annulaire interne (25) adjacente à sa dite autre extrémité (23) avec une entrée profilée (24) partant de ladite autre extrémité (23) en direction de la gorge (25) et de la butée intérieure (26) sur le dispositif d'accouplement comprenant un circlip (26) entourant le tuyau (12) et pouvant venir en prise dans la gorge (25) en déplaçant ladite autre extrémité (23) du dispositif d'accouplement sur le circlip (26), l'entrée profilée (24) comprimant le circlip (26) pour pénétrer dans le dispositif d'accouplement (13) et s'enclencher dans la gorge (25) afin d'y être retenue et empêcher la désolidarisation du dispositif d'accouplement (13) du tuyau par mise en prise avec ladite butée (17) au niveau d'une extrémité (18) du tuyau ; caractérisé en ce que le tuyau (12) présente un siège de diamètre agrandi (15) adjacent à ladite butée faisant saillie vers l'extérieur (17) sur le tuyau (12) afin d'être mis en prise dans le circlip (26) et de maintenir le circlip dans ladite gorge (25) dans le dispositif d'accouplement (13) ; en ce que le tuyau (12) est formé d'une seconde butée (14) espacée de la première butée (17) et tournée vers celle-ci afin de retenir le circlip (26) lorsque le dispositif d'accouplement (13) se déplace sur le circlip pour mettre en prise le circlip dans la gorge (25) dans le dispositif.

2. Raccord de tuyaux selon la revendication 1, caractérisé en ce que la seconde butée (14) sur le tuyau (12) est une butée annulaire formée d'une seule pièce avec le tuyau.

3. Raccord de tuyaux selon la revendication 1 ou la revendication 2, caractérisé en ce que la première butée (17) au niveau d'une extrémité (18) du tuyau (12) est une butée annulaire formée d'une seule pièce avec le tuyau.

4. Raccord de tuyaux selon l'une quelconque des revendications 1 à 3, caractérisé en ce que le dispositif d'accouplement (13) est un écrou présentant un alésage (19) afin de recevoir le tuyau, une partie de l'alésage adjacent à une extrémité (21) de l'écrou qui peut faire saillie depuis le tuyau étant vissée (20) pour coïncider avec un filetage sur un autre composant et l'alésage adjacent à l'autre extrémité (23) de l'écrou étant formée desdites gorge annulaire (25) et entrée profilée (24).

5. Raccord de tuyaux selon l'une quelconque des revendications 1 à 4, caractérisé en ce que le circlip (26) comprend un manchon partiellement annulaire (27) afin de ménager ladite butée, le manchon présentant une nervure circulaire (28) sur sa périphérie extérieure afin de venir en prise dans la gorge annulaire (25) dans le dispositif d'accouplement (13).

6. Raccord de tuyaux selon l'une quelconque des revendications 1 à 5, caractérisé en ce que l'entrée profilée (24) sur le dispositif d'accouplement (13) a une forme biseautée.
